(19) Europäisches Patentamt
European Patent Office
Office européen des brevets

(11) Publication number: **0 184 278**
**A2**

# (12) EUROPEAN PATENT APPLICATION

(21) Application number: 85302657.3

(22) Date of filing: 16.04.85

(51) Int. Cl.[4]: C 08 G 73/10
C 08 J 9/02

(30) Priority: 06.12.84 US 678992

(43) Date of publication of application:
11.06.86 Bulletin 86/24

(84) Designated Contracting States:
AT BE CH DE FR GB IT LI LU NL SE

(71) Applicant: Gagliani, John
6280 Lance Place
San Diego California 92120(US)

(71) Applicant: Long, John V.
1756 E. Lexington Avenue
El Cajon California 92121(US)

(72) Inventor: Gagliani, John
6280 Lance Place
San Diego California 92120(US)

(72) Inventor: Long, John V.
1756 E. Lexington Avenue
El Cajon California 92121(US)

(74) Representative: Spencer, Graham Easdale et al,
A.A. Thornton & CO Northumberland House 303-306,
High Holborn
London WC1V 7LE(GB)

## (54) Method of making modified polyimide foams.

(57) A method of making a resilient, flame resistant modified polyimide foam comprises:

(a) mixing an aromatic dianhydride (component A) with at least one lactam and/or amino acid (component B) in a mole ratio of A:B of from 1:1.5 to 1:0.05,

(b) mixing an alcohol with the mixture from step (a) and heating the resulting mixture to form an esterified N-substituted imide,

(c) mixing at least one diamine (component C) with the product of step (b),

(d) drying the resulting mixture, and

(e) polymerising the resulting solid at a temperature of from 120° to 320°C to give a modified polyimide foam.

EP 0 184 278 A2

Method of making modified polyimide foams

The present invention is concerned with polyimide resins and, more particularly, with a method of making resilient, flame resistant polyimide and polyimide-amide foams.

U.S. Patents 4 161 477, 4 183 838 and 4 183 839 disclose certain polyimide compositions which are flame resistant and serve as coatings and adhesives. The compositions described in these patents are made by first preparing a suitable bisimide by reacting an aromatic tetracarboxylic acid dianhydride with a lactam or amino acid. The mole ratio of dianhydride to lactam or amino acid is preferably in the range 1:2.7 to 1:2.3 and the imidisation reaction is preferably carried out at a temperature of from 170° to 200°C for a period of 20 to 60 minutes.

The resulting N,N'-disubstituted bisimide dicarboxylic acid is then dissolved in an inert solvent and a suitable diamine added to produce a viscous fluid containing an intimate, unpolymerised mixture of the bisimide and the diamine which can be converted to a high molecular weight polymer by the application of heat.

The solution is coated on to a surface and polymerised by heating to a temperature of from 177° to 316°C for a period of 30 minutes to 5 hours. The following is an example of the type of exchange reaction

which takes place:

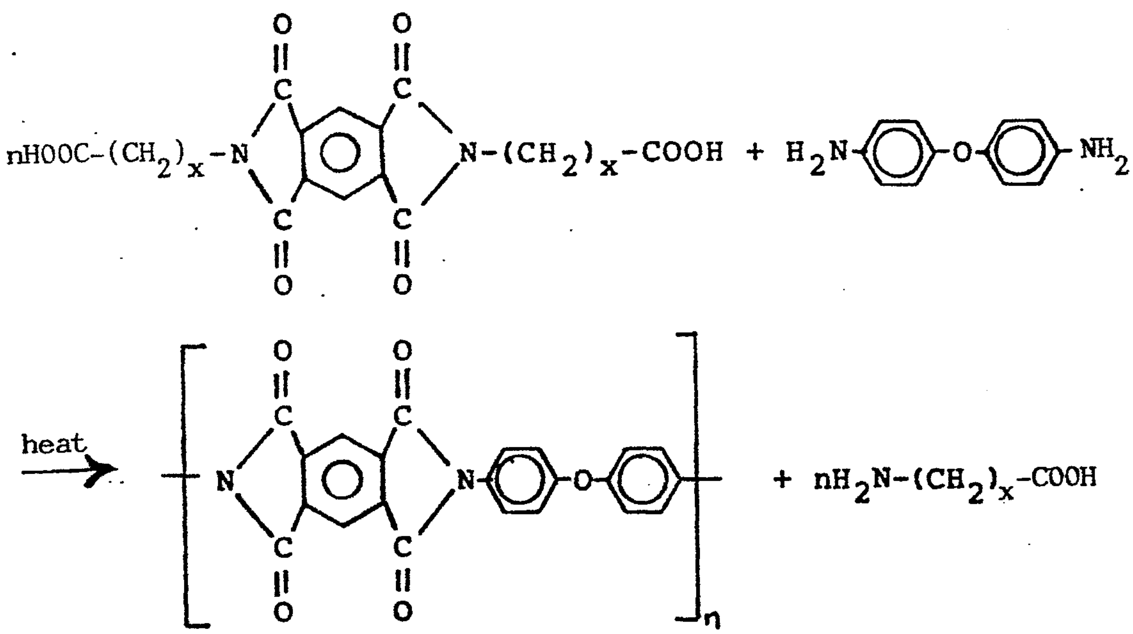

where n is a positive integer and x is an integer of from 2 to 7.

The resulting coating is tough, highly adherent to various surfaces, and has very few pinholes or bubbles. It has excellent peel strength and is resistant to high temperatures, peeling and abrasion.

However, the coating material of the prior art is not suitable for applications requiring a cellular or foam material since conventional agitation foaming and the addition of known blowing agents add to the costs and complexity of the process and are not entirely effective at the relatively high polymerisation temperatures required.

A method of producing polyimide foams which overcomes many of these problems is described in our

earlier U.S. Patents 4 394 464 and 4 426 463. According to this method, an aromatic dianhydride is reacted with a lactam or amino acid at a temperature of from 150° to 200°C to produce an N-substituted imide. The resulting product is cooled to below 70°C, dissolved in an esterifying solvent, and refluxed for at least 60 minutes to esterify the imide. An excellent flame resistant, resilient foam is obtained by heating the dry material to at least 120°C for a suitable period.

While this method produces excellent polyimide foams, it is undesirably complex and requires a number of sequential steps to be performed at various relatively high temperatures. This tends to result in high energy costs and variable product characteristics arising from unavoidable process variations.

We have now found that by suitably varying reaction conditions and certain ingredients, within specified limits, starting materials similar to those described above can be used to produce resilient, flame resistant foams of modified polyimide cellular structure, using a series of simple, easily controlled, and energy efficient steps. For the purpose of this specification, the term "modified polyimide" is used to refer to a range of imide and imide-amide polymers varying from almost entirely polyimide to almost entirely polyimide-amide.

The basic steps in producing the resilient foam of the present invention involve reacting aromatic dianhydride with a lactam and/or amino acid in an alcohol in a mole ratio of dianhydride to lactam and/or amino acid of from 1:1.5 to 1:0.05 to produce an esterified N-substituted imide, adding a suitable diamine and any desired additives, drying the mixture to a film or powder, and finally heating the dry material to a temperature sufficient to cause the material to melt and spontaneously foam. The heating causes the material to simultaneously

undergo both a condensation reaction and an exchange reaction. The condensation reaction produces water and alcohol vapours which cause the molten mass to expand. As the reactions proceed, the molten mass forms a cellular structure which becomes self-supporting and finally cures to an imide and/or imide-amide polymer depending on the heating conditions employed.

According to the present invention, therefore, there is provided a method of making a resilient, flame resistant modified polyimide foam, which comprises:

(a) mixing an aromatic dianhydride (component A) with at least one lactam and/or amino acid (component B) in a mole ratio of A:B of from 1:1.5 to 1:0.05,

(b) mixing an alcohol with the mixture from step (a) and heating the resulting mixture to form an esterified N-substituted imide,

(c) mixing at least one diamine (component C) with the product of step (b),

(d) drying the resulting mixture, and

(e) polymerising the resulting solid at a temperature of from 120° to 320°C to give a modified polyimide foam.

Suitable aromatic dianhydrides for use in the method of the invention include those described in the prior art references cited above. Due to their ready availability at reasonable prices and the excellent foams which they produce, preferred dianhydrides are pyromellitic dianhydride and 3,3', 4,4' benzophenone tetracarboxylic acid dianhydride (BTDA), and mixtures thereof.

Any suitable lactam or amino acid may be reacted with the dianhydride to produce the N-substituted imide. Preferred lactams are those of the formula:

$$H_2C-(CH_2)_x-NHCO$$

where x is an integer of from 2 to 7. Lactams in which x is 2,3, or 4 (i.e. 2-pyrrolidone, 2-piperidone, or caprolactam respectively) are particularly preferred and, of these, caprolactam is the most preferred because its larger ring structure tends to open more easily with heat for reaction with the dianhydride.

Preferred amino acids are those derived from the three preferred lactams, namely 6-aminocaproic acid, 5-aminovaleric acid, and 4-aminobutyric acid. The preferred lactams and amino acids may each be used alone or two or more of them may be combined in any suitable mixture.

The dianhydride and the lactam and/or amino acid are mixed together and the alcohol added. Any suitable reaction conditions can be used to produce the esterified N-substituted imide. Preferred conditions are heating at a temperature of from 60° to 120°C for a period of 30 to 90 minutes. Particularly preferred conditions are refluxing the mxture (at about 68°C) for a period of 30 to 40 minutes. It appears that initially the dianhydride and the lactam and/or amino acid react to form the N-substituted imide, which is immediately esterified by the alcohol.

In order to produce a satisfactory foaming material, we have found that it is essential that the mole ratio of dianhydride to lactam and/or amino acid is in the range 1:1.5 to 1:0.05. Below this range, the material forms a coating without foaming and above this range, excessively rigid material is produced. Within this range, the compressive resistance of the foam produced is inversely proportional to the amount of lactam and/or amino acid mixed with the dianhydride. This is important in providing foams of various compressive resistance

values for use in specific applications. Thus a mole ratio of dianhydride to lactam and/or amino acid of about 1:0.05 gives a foam of high density and high compressive resistance, while a mole ratio of about 1:1.5 gives a foam of relatively low density and relatively low compressive resistance.

A preferred mixture is 3,3',4,4'-benzophenone tetracarboxylic acid dianhydride and caprolactam; the required compressive resistance value of the foam for a given application can be selected simply by using the appropriate quantity of caprolactam.

The N-substituted imide produced by the dianhydride reaction (before esterification) has the formula:

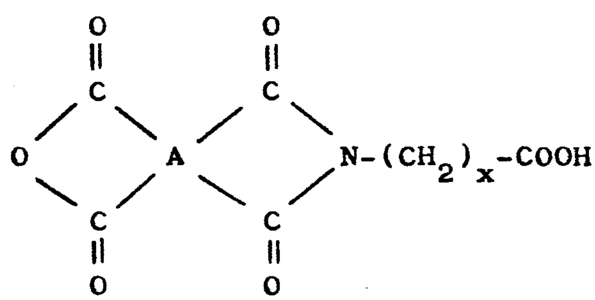

where x is an integer of from 2 to 7 and A is

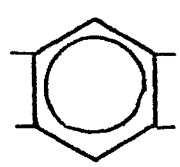

and/or

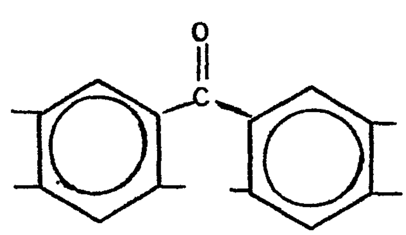

This imide is believed to be almost immediately esterified by the alcohol. Suitable alcohols include aliphatic alcohols having up to 7 carbon atoms and aromatic alcohols, both of which may have halogen or amino substituents, and mixtures thereof. The preferred alcohol is methanol. The esterification reaction appears to take place as follows:

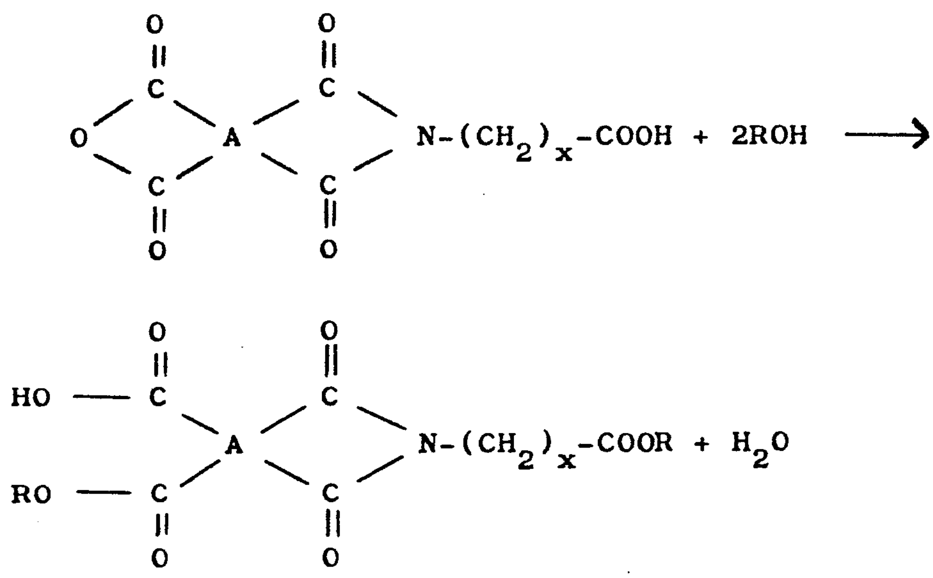

where x and A are as before and R is an aliphatic or aromatic radical which may have halogen or amino substituents.

Typically, a mole ratio of imide to alcohol of from 1:5 to 1:10 is preferred to ensure rapid esterification at reflux temperature. Once the esterification is complete, the selected diamine or diamines are added to the solution. An approximately stoichiometric quantity of diamine to dianhydride is generally preferred.

Suitable diamines include, for example, m-phenylenediamine, p-phenylenediamine, 4,4'-diaminodiphenyl ether, 4,4'-diaminodiphenyl sulfone, 3,3'-diaminodiphenyl sulfone, 4,4'-diaminodiphenyl sulfide, 4,4'-diaminodiphenyl methane, 3,3' diaminodiphenyl methane, and mixtures thereof. Of these, 4,4'-diaminodiphenylmethane is preferred. If desired, aliphatic diamines may be used in combination with these aromatic diamines. Suitable aliphatic diamines for this purpose include, for example, 1,3-diaminopropane, 1,4-diaminobutane, 1,6-diaminohexane, 1,8-diaminooctane, 1,12-diaminododecane, and mixtures thereof. An aromatic diamine containing a methylene bridge is preferred. A particularly preferred mixture is 4,4'-diaminodiphenylmethane and 1,6-diaminohexane.

Additives to improve various characteristics of the final foam may be added as desired. Any appropriate additives may be used, such as fillers, surfactants to improve uniformity of the cellular structure, ultraviolet absorbers, or the like. Suitable surfactants include, for example, Dow Corning Corp. 190 and 193 (silicone surfactants), FC430 from Minnesota Mining & Manufacturing Co., Zonyl FSC from E.I. du Pont de Nemours & Co., L550 from Union Carbide Corp. and BRIJ 78, a polyoxyethylene ether, from ICI America. While any amount of these materials may be added, a preferred proportion is from 0.01 to 2% by weight based on the weight of the mixture before drying. Of the surfactants, BRIJ 78 is preferred. Fillers and reinforcing additives may also be added before drying the mixture. Suitable fillers include, for example, Kevlar aramid fibres, graphite fibres, glass fibres, carbon and graphite fibres, Teflon fluorocarbon powders, and mixtures thereof.

The mixture is then dried by any suitable method. Simply heating the mixture in an oven to a temperature of from 65° to 95°C untril dry is satisfactory. Other conventional methods, such as spray drying, rotary drying, and thin film evaporation, may be used as desired.

The resulting free-flowing powder or flakes may be further ground or treated as desired and may be stored indefinitely at room temperature.

The final step of converting the dry powder into a foam is effected by heating the powder to a selected foaming temperature for a suitable period.

The reaction which takes place is quite complex since it involves both condensation and exchange reactions. When the exchange reaction is forced to completion by higher temperatures and/or prolonged heating, i.e. in the range 230° to 320°C for a period of 30 to 60 minutes (preferably, about 260°C for a period of about 45 minutes), the polyimide of the resulting foam is primarily produced according to the following reaction scheme:

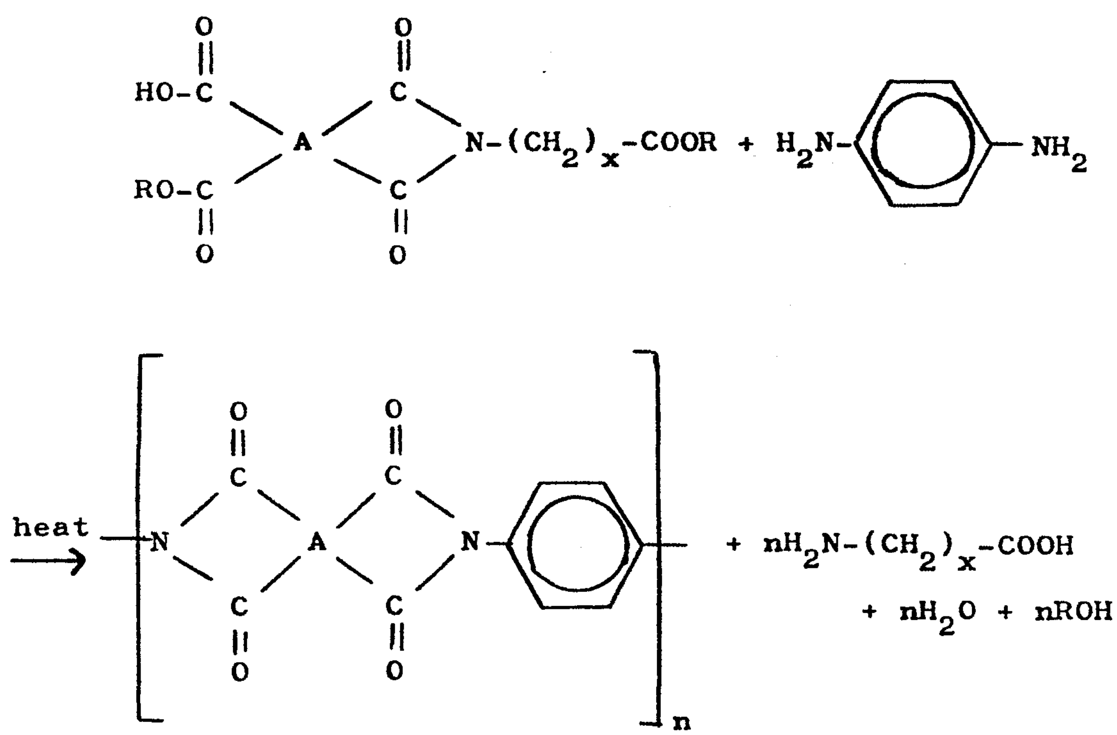


where n is a positive integer and x and A are as before.

If, however, the exchange reaction does not proceed to completion, the products of the intermediate condensation reaction will remain unreacted and a variable amount (which will depend on reaction time, temperature and conditions) of polymer having the following imide-amide structure will be present in the resulting foam:

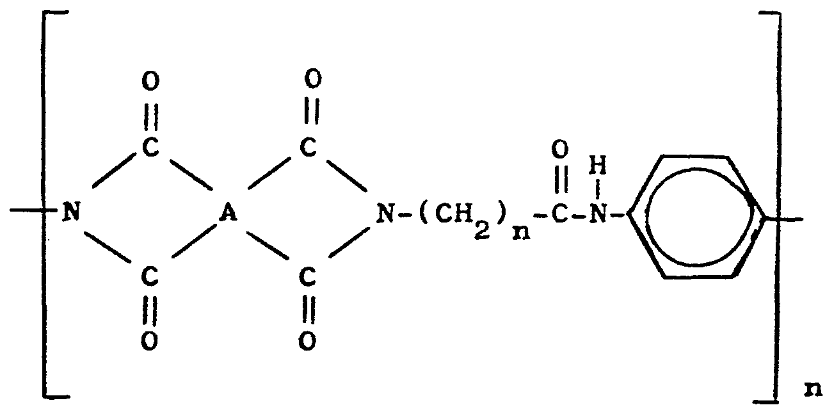

where n, x, and A are as before.

As the powder is heated, it first melts, then as the condensation reaction begins, water and alcohol are produced and vaporised, causing the molten mass to expand. The resulting cellular structure becomes self-supporting and finally cures to an imide and/or imide-amide polymer, with the relative proportions of the two polymers depending on the heating conditions (time and temperature) employed. The resulting foam is tough, resilient, and does not emit significant smoke or toxic by-products when exposed to direct flame.

When an almost entirely polyimide-amide foam is desired, heating should be at a temperature of from 120° to 220°C for a period of 10 to 40 minutes (preferably, about 190°C for a period of about 30 minutes). As the temperature is increased above this range (and a somewhat longer heating period is used) the proportion of polyimide in the resulting foam increases. Increasing the proportion of polyimide makes the foam more flame resistant, but less flexible. Thus, by varying the heating conditions, flexibility and flame resistance can be tailored to meet specific requirements.

In order that the invention may be more fully understood, the following examples are given by way of illustration only. All parts and percentages are by weight unless otherwise indicated.

Example 1

322.23g (1.0 mole) of 3,3',4,4'-benzophenone tetra carboxylic acid dianhydride (BTDA) and 45.26g (0.4 mole) of caprolactam were placed in a 3-litre flask and about 250g of methanol was added. The mixture was heated to reflux temperature (about 75°C) and refluxed for about 60 minutes until the mixture appeared clear. The mixture was cooled to about 55°C and 168.5g (0.85 mole) of 4,4'-diaminodiphenylmethane and 17.4g (0.15 mole) of 1,6-diaminohexane were added. The mixture was refluxed (at about 75°C) for about 15 minutes, then cooled to room temperature and poured into a shallow aluminium dish. The resulting thick liquid was dried for about 3 hours at about 65°C. The dry residue was removed from the dish and placed in an oven which had been pre-heated to about 230°C. After heating for about 30 minutes, the material was found to have expanded into a flexible, resilient foam sheet having an homogeneous cellular structure. When exposed to direct flame, the foam produced no visible smoke. This foam was found to consist primarily of polyimide.

Example 2

The procedure of Example 1 was repeated using various quantities of caprolactam. Whereas Example 1 used 45.26g (0.4 mole) of caprolactam to give a molar ratio of BTDA to caprolactam of 1:0.4, these experiments

used caprolactam quantities of: (a) 5.66 g (1:0.05 ratio), (b) 11.32g (1:0.1 ratio), (c) 22.64 g (1:0.2 ratio), (d) 45.24g (1:0.4 ratio), (e) 169.8g (1:1.5 ratio), and (f) 226.4g (1:2 ratio). The foam produced in experiments (a) to (d) had excellent foam characteristics, but different degrees of foam rise and consequently different densities. The material produced in (e) had a low rise and that produced in (f) did not foam at all. The densities of the foams decreased from (a) to (d). All properties related to density varied accordingly. Thus the compressive resistance of the foams increased as the proportion of caprolactam in the mixtures decreased.

Example 3

The procedure of Example 1 was repeated using the following solvents in place of the methanol: (a) isopropanol, (b) 2-aminoethanol, (c) benzene, (d) N,N-dimethylacetamide, and (e) acetone. In experiments (a) and (b) in which a reactive alcohol was used to esterify the imide, excellent foams were obtained. Where an inert solvent was used, as in (c) to (e), foaming did not take place.

Example 4

The procedure of Example 1 was repeated up to the foaming step. Five dry powder samples were placed in pre-heated circulating air ovens at the following temperatures for the periods indicated: (a) about 125°C for about 120 minutes, (b) about 200°C for about 30 minutes, (c) about 220°C for about 10 minutes, (d) about 235°C for about 90 minutes, and (e) about 310°C for about 30 minutes. Each sample formed a foam of good resiliency and flame resistance. The foams of experiments (a) and (b) were found to be primarily polyimide-amide and to have outstanding flexibility, but lower flame resistance. The foam of (c) was found to be a relatively even mix of imide

and imide-amide polymers and to have intermediate flexibility and flame resistance. The foams of (d) and (e) were found to be primarily polyimide and to have less flexibility but outstanding flame resistance. In general, higher temperatures and longer heating periods produced a greater proportion of polyimide and a stiffer foam. The higher temperatures were found to be more significant than the longer heating periods in producing high polyimide foams.

Example 5

The procedure of Example 1 was repeated using the following diamines in place of the mixture of 4,4'-diaminodiphenylmethane and 1.6-diaminohexane: (a) m-phenylenediamine (1.0 mole), (b) 4,4'-diaminodiphenyl sulfone (1.0 mole), (c) 4,4'-diaminodiphenyl oxide (0.5 mole) and 1,3-diaminopropane (0.5 mole), and (d) 4,4'-diaminodiphenyl oxide (0.1875 mole) and 4,4'-diaminodiphenyl sulfide (0.1875 mole). In all cases, the resulting foams had uniform cellular structures and excellent heat and flame resistances. However, the flexibility and resiliency of the samples varied to some degree.

Example 6

The procedure of Example 1 was repeated using various amounts of different lactams in place of the 0.25 mole of caprolactam used in Example 1: (a) 2-pyrrolidone (0.4 mole), (b) 2-piperidone (0.4 mole), and (c) caprolactam (0.2 mole) and 2-piperidone (0.2 mole). In all cases, the resulting foams had excellent flame resistance with slight variations in physical properties according to the lactam used.

Example 7

The procedure of Example 1 was repeated except that the foaming step was accomplished using a microwave oven. The dry powder was placed in the oven and a power

of about 1.0Kw was applied for about 6 minutes. Rapid melting and expansion took place and an excellent resilient foam was produced after about 6 minutes.

Example 8

322.3g (1.0 mole) of BTDA, 22.6g (0.2 mole) of caprolactam, and about 250g of methanol were placed in a 3-litre flask and refluxed (at about 75°C) for a period of about 40 minutes. The mixture was then cooled to about 50°C and 168.5g (0.85 mole) of 4,4'-diaminodiphenylmethane and about 5g of BRIJ 78 surfactant were added. The mixture was refluxed for about 20 minutes and the resulting thick, syrup-like liquid was poured into a shallow aluminium dish and allowed to dry overnight. The dry residue was broken up into granules which were spread onto an aluminium foil sheet and heated in an oven at about 240°C. After heating for 25 minutes, the material was found to have expanded into a flexible, resilient foam sheet having an homogeneous cell structure. When exposed to direct flame, the material did not produce smoke or toxic gases.

Example 9

The procedure of Example 1 was repeated using various amounts of different lactams and/or amino acids in place of the 0.25 mole of caprolactam used in Example 1: (a) 26.2g (0.2 mole) of 6-aminocaproic acid, (b) 52.6g (0.4 mole) of 6-aminocaproic acid, (c) 13.15g (0.1 mole) of 6-aminocaproic acid and 11.3g (0.1 mole) of caprolactam, (d) 29.3g (0.25 mole) of 5-aminovaleric acid, (e) 25.75g (0.25 mole) of 4-aminobutyric acid, (f) 38.8g (0.25 mole) of 2-piperidone, and (g) 30.25g (0.25 mole) of 2-pyrrolidone. The foams produced all had similar characteristics of flexibility, resiliency, and density.

Claims:

1. A method of making a resilient, flame resistant modified polyimide foam, which comprises:

(a) mixing an aromatic dianhydride (component A) with at least one lactam and/or amino acid (component B) in a mole ratio of A:B of from 1:1.5 to 1:0.05,

(b) mixing an alcohol with the mixture from step (a) and heating the resulting mixture to form an esterified N-substituted imide,

(c) mixing at least one diamine (component C) with the product of step (b),

(d) drying the resulting mixture, and

(e) polymerising the resulting solid at a temperature of from 120° to 320°C to give a modified polyimide foam.

2. A method according to claim 1, in which component A is pyromellitic dianhydride and/or 3,3',4,4'-benzophenone tetracarboxylic acid dianhydride.

3. A method according to claim 1 or 2, in which component B is a lactam of the formula:

$$\overbrace{H_2C-(CH_2)_x-NHCO}$$

where x is an integer of from 2 to 7.

4. A method according to claim 1 or 2, in which component B is 2-pyrrolidone, 2-piperidone, caprolactam, 4-aminobutyric acid, 5-aminovaleric acid, 6-aminocaproic acid, or a mixture of two or more thereof.

5. A method according to any of claims 1 to 4, in which component A is 3,3',4,4'-benzophenone tetracarboxylic acid dianhydride and component B is caprolactam.

6. A method according to any of claims 1 to 5, in which the alcohol is methanol.

7. A method according to any of claims 1 to 6, in which component C is 4,4'-diaminodiphenylmethane.

8. A method according to any of claims 1 to 7, in which component C is a mixture of at least two diamines, at least one of which is aromatic and at least one of which is aliphatic.

9. A method according to claim 8, in which the aromatic diamine contains a methylene bridge.

10. A method according to claim 8 or 9, in which component C is a mixture of 4,4'-diaminodiphenylmethane and 1,6-diaminohexane.

11. A method according to any of claims 1 to 10, which includes the additional step of adding from 0.01% to 2% by weight of a surfactant to the mixture before drying.

12. A method according to any of claims 1 to 11, in which step (e) is effected by heating at a temperature of from 230° to 320°C for a period of 30 to 60 minutes to obtain a foam which is predominantly composed of polyimide.

13. A method according to any of claims 1 to 11, in which step (e) is effected by heating at a temperature of from 120° to 220°C for a period of 10 to 40 minutes to obtain a foam which is predominantly composed of polyimide-amide.